# EUROPÄISCHE PATENTSCHRIFT

(11) **EP 1 435 791 B1**
(45) Veröffentlichungstag und Bekanntmachung des Hinweises auf die Patenterteilung: **22.04.2009**
(21) Anmeldenummer: 02779446.0
(22) Anmeldetag: 01.10.2002
(51) Int. Cl.: A22C 13/00

(54) **VERFAHREN ZUR HERSTELLUNG EINES FOLIENSCHLAUCHES**
METHOD FOR PRODUCING A CASING
PROCEDE POUR PRODUIRE UN BOYAU

(30) Priorität: 08.10.2001 DE 10149457
(43) Veröffentlichungstag der Anmeldung: 14.07.2004
(73) Patentinhaber: Poly-clip System GmbH & Co. KG, 60489 Frankfurt am Main (DE)
(72) Erfinder: HANTEN, Jürgen, 61231 Bad Nauheim (DE)
(74) Vertreter: Eisenführ, Speiser & Partner
(86) Internationale Anmeldenummer: PCT/EP2002/010976
(87) Internationale Veröffentlichungsnummer: WO 2003/030647

(56) Entgegenhaltungen:
- GB-A- 2 126 191
- US-A- 4 410 011
- US-A- 4 528 225
- US-A- 4 940 614

## Beschreibung

Die Erfindung betrifft ein Verfahren zur kontinuierlichen Herstellung eines unmittelbar nach seiner Fertigstellung mit Füllgut befüllten Folienschlauches beliebiger Länge aus einer bandförmigen Flachfolie, bei dem die Flachfolie von einem Vorrat abgezogen, In Längsrichtung zum Schlauch gebogen und entlang ihren Längsrändern durch eine dauerhafte Verbindung verschlossen wird gemäß dem Oberbegriff des Ansprüchs 1.

Es ist seit langem bekannt, die schlauchförmige Verpackungshülle, die zur Fertigung von Portionspackungen mehr oder weniger pastösen Füllguts wie beispielsweise Würsten benötigt wird, unmittelbar vor dieser Fertigung in situ dadurch herzustellen, dass eine bandförmige Folie über eine Formschulter zum Schlauch gebogen und ihre einander überlappenden Längsränder durch Heißsiegelung miteinander fest verbunden werden; vgl. u.a. EP 105 558 B1 und EP 177 992 B1. Um eine luft- und flüssigkeitsdichte Slegelnaht zu gewährleisten, muss die Folie beidseits siegelfähig sein, weil beim Überlappen der Follenränder die Außenfläche mit der Innenfläche in Kontakt kommt. Zum Einsatz kommen daher in solchen Fällen Dreischicht-Folien aus einer mittleren Trägerfolie und beidseitigen Siegelschichten. Solche Folien sind nicht nur teuer in der Herstellung, sondern haben den zusätzlichen Nachteil, dass das bei der Wurstherstellung In den Folienschlauch eingefüllte Brät an der Siegelschicht nicht ausreichend haftet, so dass sich das Füllgut beim Kochvorgang ablöst und sich Blasen bilden, welche sich mit Fett- oder Gelatinematerlal aus dem Brät füllen; das ist schon aus optischen Gründen unerwünscht. Deshalb wird die dem Füllgut zugewandte Oberfläche der Folie mechanisch oder chemisch behandelt, um die Bräthaftung zu erhöhen. So ist beispielsweise gemäß der DE 196 18 172 A1 vorgesehen, die (spätere) Innenfläche der schlauchförmigen Verpackungshülle mittels einer Korona zu behandeln, um die Bräthaftung an der Innenfläche des Folienschlauches zu gewährleisten. All dies erfordert zusätzlichen Aufwand.

Aus dem US-Patent 4,410,011, welche den nächstkommenden Stand der Technik bildet, von dem die vorliegende Erfindung ausgeht, ist eine schlauchförmige Umhüllung für Nahrungsmittel sowie ein Verfahren zu deren Herstellung entnehmbar. Hierbei wird eine rechteckige Folie in Förderrichtung zu einem Schlauch gebogen, wobei die Längskanten auf Stoß aneinander liegen. Mittels eines separat zugeführten Streifens, der die beiden Längskanten überdeckt, werden diese miteinander verklebt.

Weiterhin geht aus dem US-Patent 4,940,614 eine schlauchförmige Umhüllung für Nahrungsmittel hervor, bei der eine Folie, die mit einer äußeren Schicht versehen ist, mit Hilfe eines Klebestreifens, der beide Kanten überdeckt, zu einem Schlauch geformt. Die Längskanten des Schlauches stoßen dabei parallel aneinander.

Schließlich geht aus der britischen Patentanmeldung 226 191 eine Verpackung für Wurst und ähnliches hervor, bei der eine Folie, die auf ihrer Innenseite mit einer Siegelschicht überzogen ist, so zu einem Schlauch zusammengebogen wird, dass sich die Längskanten der Folie überlappen. Ein Klebefilm, der mit einer Heiß-Siegelschicht überzogen ist, wird von Innen auf der Überlappungszone angebracht.

Die sich hieraus ergebende Aufgabe, die kontinuierliche Herstellung eines unmittelbar nach seiner Fertigstellung insbesondere mit Wurstbrät befüllten Folienschiauchs beliebiger Länge auf einfachere und namentlich kostengünstigere Weise zu ermöglichen, löst die Erfindung durch die Merkmale des Ansprüchs 1. In den sich darau anschließenden Ansprüchen 2 und 3 finden sich vorteilhafte Ausgestaltungen. Der zusätzliche Aufwand des Streifens wiegt dabei gering gegenüber dem Vorteil einer nur einseitig mit einer Siegeischicht versehenen Folie, und zwar insbesondere dann, wenn bei der Befüllung des Folienschlauches mit Wurstbrät die vorherige mechanische oder chemische Behandlung seiner (späteren) Innenfläche entfallen kann.

Vorzugsweise sind die Verbindungsschichten als Siegelschichten ausgebildet, die durch Wärmeeinwirkung miteinander verbunden werden. Es kommt aber auch eine Verbindung durch Klebschichten oder mittels kalt versiegelbarer Schichten in Frage.

Das Abtrennen des Streifens kann vorteilhaft beim Abziehen der bandförmigen Flachfolie geschehen.

Die Kunststoff-Folie besteht vorzugsweise aus einem Werkstoff mit einer Oberfläche, an der Wurstbrät haftet, ohne dass sie einer zusätzlichen Bearbeitung bedarf. Das kann beispielsweise Polyamid sein, aber auch PVC und PVDC sind geeignet, ferner Mischfolien (Blends) oder Folien aus ionomerem Kunststoff wie Surlyn®.

Nachstehend wird die Erfindung an Ausführungsbeispielen an Hand der Zeichnung veranschaulicht. Darin zeigt
- Fig. 1: in schematischer Perspektivansicht eine zur Durchführung des Verfahrens geeignete Vorrichtung; und
- Fig. 2: einen Querschnitt durch den dabei erzeugten Folienschlauch gemäß der Linie A-A in Fig. 1.

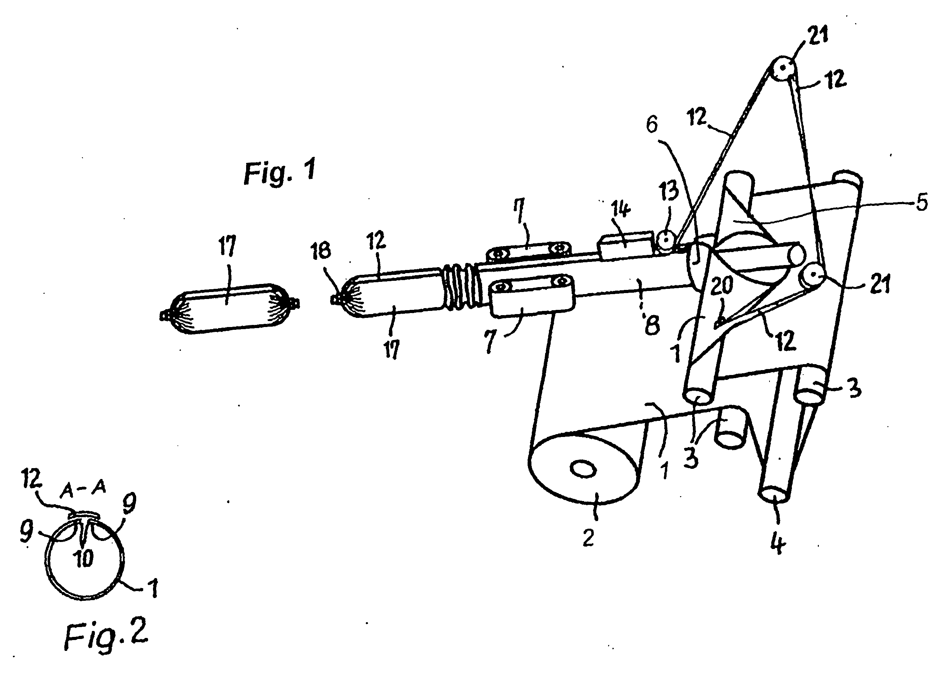

Eine bandförmige, bereits einseitig mit einer Siegelschicht versehene Flachfolie 1 wird von einem Vorrat 2 in Rollenform abgezogen und über Umlenkrollen 3 sowie eine Tänzerrolle 4 über eine Formschulter 5 sowie durch einen Formkragen 6 gezogen, und zwar von parallelen Transportbändern 7 entlang einem Führungsrohr 8, welches von der zum Schlauch gebogenen Folie 1 überdeckt ist. Die Formschulter 5 in Verbindung mit dem Formkragen 6 lässt die beiden Längskanten 10 der Längsränder 9 der Folie 1 einander ("auf Stoß") am Fünrungsrohr 8 - das in Fig. 2 nicht dargestellt ist - gegenüberliegen, wobei die Siegelschicht der Folie 1 außen liegt

Ein Folienstreifen 12 wird an einem Rand der Folie 1 von dieser mit Hilfe eines Messers 20 abgetrennt und über Umlenkrollen 21 unter Drehung der Rolle 13 zugeführt. Auf diese Weise entspricht die zur Verfügung stehende Länge an Streifen 12 stets der zur Verfügung stehenden Länge an Folie 1, und es bedarf keiner gesonderten Bereitstellung und Beschickung der Herstellvorrichtung mit diesen beiden Bestandteilen des Folienschlauches 15.

Ein Siegelbalken 14 verbindet den Streifen 12 fest mit den beiden Längsrändern 9 der Folie 1 und steilt dadurch den Folienschlauch 15 her, der kontinuierlich - etwa in einer Länge von 2000 m - über eine Ihn raffende Speicherstation 16 in eine nicht dargestellte Füllstation gelangt, in der Portionspackungen 17, beispielsweise Würste durch Einfüllen des Füllguts in den Folienschlauch 15, Einschnüren und Verschließen (Clips 18) hergestellt werden.

## Patentansprüche

1. Verfahren zur kontinuierlichen Herstellung von Portionspackungen mit pastösem Füllgut, insbesondere Würsten, in einem Folienschlauch (15) aus einer einseitig mit einer Verbindungsschicht versehenen bandförmigen Flachfolie (1), die von einem Vorrat (2) abgezogen und in Längsrichtung derart zum Schlauch gebogen wird, dass die Verbindungsschicht außen liegt und die Längskanten (10) der Längsränder (9) einander gegenüberliegen, worauf ein verbindungsfähiger Streifen (12) in Längsrichtung über beide Längsränder (9) gelegt und mit diesen verbunden wird, **dadurch gekennzeichnet, dass** der Streifen (12) von einem Rand der bandförmigen Flachfolie (1) abgetrennt und derart umgelenkt wird, dass seine Verbindungsschicht auf der Außenseite der zum Schlauch gebogenen Folie (1) zu liegen kommt, und der so gebildete Folienschlauch (15) unmittelbar anschließend mit Füllgut befüllt wird.

2. Verfahren nach Anspruch 1, **dadurch gekennzeichnet, dass** die Flachfolie (1) aus einem Werkstoff mit bräthaftungsgeneigter Oberfläche besteht.

3. Verfahren nach Anspruch 1 oder 2, **dadurch gekennzeichnet, dass** der Streifen (12) beim Abziehen der bandförmigen Flachfolie (1) von dieser abgetrennt wird.

## Claims

1. A method of continuously producing single sachets with pasty filling material, in particular sausages, in a film tubing (15) consisting of a flat sheet film (1) in the form of a tape, which is provided on one side with a joining layer and which is drawn off from a store (2) and is curved to form a loop in the longitudinal direction in such a way that the joining layer is situated on the outside and the longitudinal corners (10) of the longitudinal edges (9) are opposite one another, after which a strip (12) capable of joining is laid over the two longitudinal edges (9) in the longitudinal direction and is connected to the latter, **characterized in that** the strip (12) is severed from an edge of the flat sheet film (1) in the form of a tape and is reversed in such a way that its joining layer comes to rest against the outer side of the sheet film (1) curved to form the tubing, and immediately after that the film tubing (15) formed in this way is filled with filling material.

2. A method according to claim 1,
**characterized in that** the flat sheet film (1) consists of a material with a surface with a tendency towards meat cling.

3. A method according to claim 1 or 2,
**characterized in that** the strip (12) is severed from the flat sheet film (1) in the form of a tape when the latter is pulled off.

## Revendications

1. Procédé de production en continu d'emballages en portion ayant du produit de remplissage pâteux, notamment de saucisses, dans un boyau (15) constitué d'une feuille (1) plate en forme de bande, qui est munie d'un côté d'une couche de liaison qui est retirée d'une réserve (2) et qui est courbée dans la direction longitudinale en un boyau, de façon à ce que la couche de liaison soit à l'extérieur et que les arêtes (10) longitudinales des bords (9) longitudinaux soient opposées l'une à l'autre, une bande (12) apte à la liaison étant mise dans la direction longitudinale sur les deux bords (9) longitudinaux et étant reliée à ceux-ci, **caractérisé en ce que** la bande (12) est séparée d'un bord de la feuille (1) plate en forme de bande et est déviée de façon à ce que sa couche de liaison vienne sur la face extérieure de la feuille (1) courbée en un boyau et on remplit ensuite directement le boyau (15) ainsi formé de produit de remplissage.

2. Procédé suivant la revendication 1, **caractérisé en ce que** la feuille (1) plate est en un matériau ayant une surface tendant à adhérer à la viande.

3. Procédé suivant la revendication 1 ou 2, **caractérisé en ce que** l'on sépare la bande (12) lors de son retrait de la feuille (1) plate en forme de bande.
